# EUROPEAN PATENT APPLICATION

(11) **EP 4 654 037 A1**
(43) Date of publication of application: **26.11.2025**
(21) Application number: 25177760.3
(22) Date of filing: 20.05.2025
(51) Int. Cl.: G06F 16/2458, G06F 16/25, G06F 40/186

(54) **METHODS AND SYSTEMS FOR APPLYING A STORED ROUTINE TO A PLURALITY OF BLOCKS OF A STRUCTURED DATA OBJECT**

(30) Priority: 22.05.2024 GB 202407298
(71) Applicant: Leo RegTech Limited, London, EC2R 8DU (GB)
(72) Inventor: Norman-Walker, William, London EC2R 8DU (GB)
(74) Representative: Boult Wade Tennant LLP

(57) **Abstract**

There is provided a method and related systems for applying a stored routine to a plurality of blocks of a structured data object, wherein the blocks comprise one or more block variable instances, wherein the blocks are configured as one or more block nests, and wherein the stored routine, when executed, implements the processing of one or more execution variables, the method comprising: identifying one or more first nested blocks, each first nested block comprising a block variable match for an execution variable; executing the stored routine, wherein the executing comprises for each first nested block: assigning a respective value to the execution variables, wherein the assigning comprises, for each respective one of the execution variables: in response to a block variable match for the respective execution variable in the first nested block, assigning a value of that matched block variable to the respective execution variable; and in response to there being no block variable match for the respective execution variable in the first nested block, recursively searching outwards from the first nested block for a block variable match for the respective execution variable.

## Description

### Field of the invention:

The present invention relates to methods of applying a stored routine to a plurality of blocks of a structured data object as well as corresponding apparatus and computer programs.

### Background of the invention:

Standardised data processing techniques are used in many different industries to enable fast and efficient construction and deployment of processing flows, and to reduce errors associated with manual duplication or generation of data or commands. Such standardised data processing techniques involve establishing and/or implementing a set of rules (or functions) that govern the way specified data is processed. These rules may be implemented by stored (software) routines to manipulate, analyse and/or extract data that is defined within a structured data object. In this way, the stored routines can then be used to generate an output or a report from which a user can readily obtain desired information about the data (or the structured data object). That is, via a stored routine (or computer program, or item of software), the user may be able to enact a standardised data processing technique to query a structured data object for specific data/statistics. The particular data processing operation enacted may be selected by the user from a number of possible (standard) options, avoiding the need for the user to write new specific code for their specific situation. Advantageously therefore, via this use of standardised code chunks, a user need not be highly skilled in code writing to implement their desired processing operation and obtain their desired processed data result.

For example, a standardised (or selected) stored routine may be used to query a structured data object comprising information on a plurality of sensors present on a vehicle to determine the current state of the sensors. In another example, a standardised (or selected) stored routine may be used to query a structured data object comprising information on failures of an industrial process to extract statistics on recent failure causes .In another example, a standardised (or selected) stored routine may be used to query a structured data object comprising information on Powers of Attorney executed by a company to determine whether a suitable Power of Attorney is in place for a proposed action. It will be appreciated that there are many other example applications for such stored routines.

In many of these applications, the structured data object comprises data on a plurality of targets (or entities of interest - in the examples above, these targets/entities may be the sensors, failures, and Powers of Attorney respectively), with a different block (or section) of the structured data object for each of these targets. Each of the blocks (or sections) may have similarities representing commonalities between the targets, for example, similar instances of similar or corresponding variables.

In many such applications, the number of targets changes over time - for example, a new target may occur or be created - and therefore the structured data object must be updated/updatable to add, modify and/or delete data as appropriate. Such dynamic updates to the underlying structured data object can pose challenges for running (or executing) a standardised stored routine on that structured data object, since such standardised stored routines often rely on standardised variable names, formats, locations and/or arrangements. In particular, when dynamically updating the structured data object, variables utilised by the stored routine may be added, altered or deleted. There is therefore a need to provide methods and systems to allow implementation (or execution) of a (standardised) stored routine (or computer program, or item of software, or function) on a modifiable structured data object with modifiable (numbers of, names of, or type of) variables.

### Summary of the invention:

It is an object of the invention to address problems in the prior art such as those outlined above. In particular, it would be desirable to provide an improved method for applying a (standardised) stored routine to a plurality of blocks of a structured data object. In particular, where the number of blocks of the structured data object, and their associated data, is changeable/modifiable such that the structured data object may comprise duplicate blocks and/or variables.

In a first aspect of the invention there is provided a method for applying a stored routine to a plurality of (nested) blocks of a structured data object, wherein the blocks comprise one or more block variable instances, wherein the blocks are configured as one or more block nests, and wherein the stored routine, when executed, implements the processing of one or more execution variables, the method comprising: identifying one or more first (innermost) nested blocks, each first nested block comprising a block variable match for an execution variable; executing the stored routine, wherein the executing comprises for each first nested block: assigning a respective value to the execution variables, wherein the assigning comprises, for each respective one of the execution variables: in response to a block variable match for the respective execution variable in the first nested block, assigning a value of that matched block variable to the respective execution variable; and in response to there being no block variable match for the respective execution variable in the first nested block, recursively searching outwards from the first nested block for a block variable match for the respective execution variable.

In some embodiments, the plurality of blocks comprises duplicate blocks.

In some embodiments, each block is defined by a predetermined template.

In some embodiments, the method further comprises generating one or more of the blocks using the predetermined template.

In some embodiments, the method further comprises: providing a user interface; receiving user input from the user interface; and setting or updating an instance of one or more of the block variables based on the user input.

In some embodiments, the method further comprises updating a display of the user interface based on the user input.

In some embodiments, for each of the respective blocks: the structured data object is associated with one or more questions; one or more of the questions are displayed to the user; and one or more block variable instance of the respective block corresponds to a respective user input answer to a respective one of the one or more questions.

In some embodiments, updating the display comprises changing the questions displayed to the user.

In some embodiments, changing the questions displayed to the user comprises displaying an additional question.

In some embodiments, the method further comprises outputting a report comprising: for one or more of the identified first nested blocks, a respective section of the report comprising information based on the matched block variables associated with that respective first nested block.

In some embodiments, content of the report is dynamically updated based on the user input.

In some embodiments, the number of blocks can be dynamically altered via user input.

In a second aspect of the invention, there is provided a system comprising one or more processors configured to perform a method according to the first aspect of the invention or any embodiment thereof.

In a third aspect of the invention, there is provided a computer program comprising instructions which, when executed by one or more processors, cause the one or more processors to carry a method according to the first aspect of the invention or any embodiment thereof.

In a fourth aspect of the invention, there is provided a computer readable medium storing a computer program according to the third aspect of the invention.

### Brief description of the drawings:

Embodiments of the invention will now be described, by way of example only, with reference to the accompanying drawings, in which:
Figure 1 schematically illustrates an example scenario in which it is desired to execute a stored routine on a dynamically updatable structured data object.
Figure 2 schematically illustrates an example of a system for applying a stored routine to a plurality of blocks of a structured data object, such as the structured data object described in figure 1.
Figure 3 schematically illustrates an example of a method for applying a stored routine to a plurality of blocks of a structured data object.
Figure 4 schematically illustrates an example of a computer system suitable for implementing various aspects of the invention.

### Detailed description of embodiments of the invention:

In the description and figures that follow, certain embodiments of the invention are described and illustrated. However, it will be appreciated that the invention is not limited to the embodiments that are described and illustrated and that some embodiments may not include all of the features that are described and illustrated below. It will also be evident that various modifications and changes may be made herein without departing from the broader spirit and scope of the invention as set forth in the appended claims.

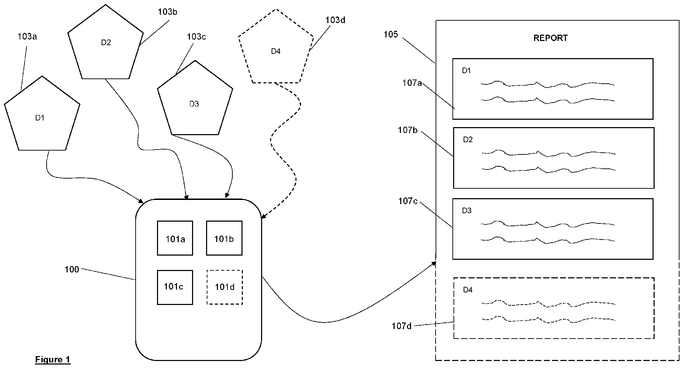

**Figure 1** schematically illustrates a situation in which a stored routine is executed on a structured data object 100 in accordance with the invention.

A structured data object (or structured data item or item of structured data or relational data object) is an object (or item) of (or comprising) data, wherein the data is arranged in a predefined format (and optionally may be of a predefined type). In this way, (standardised) rules (e.g. SQL queries) can be used to operate on, process, or reference the data within the structured data object. Examples of a structured data object may include databases, tables, data templates, and Microsoft Excel files. The location of an item of data within the structured data object (e.g., in the case of a table, the row and column) provides information on the type of data and its relationship with other items of data in the structured data object.

The structured data object 100 is a dynamically updatable structured data object. This means that data (of the structured data object 100) can be added, modified or removed from the structured data object 100, for example, in response to user input. In the case of a table, user input may, for example, cause the addition, deletion, or change of value for (or of) an item of data in a particular row and/or column and/or cell of the table.

The structured data object 100 comprises a plurality of data portions 101a, 101b, 101c, 101d. Each of these data portions corresponds to (or comprises data on/for) a respective target (or entity) 103a, 103b, 103c, 103d. Each data portion 101a, 101b, 101c, 101d may therefore comprise information about respective (single) target 103a, 103b, 103c, 103d.

In the scenario illustrated in figure 1, it is desired to be able to query the structured data object 100 to obtain information about one or more of the targets 103a, 103b, 103c, 103d. A stored routine is used to perform this query, and then to output the information to the user. The stored routine may be a standardised stored routine which may be selected by the user. The output of information may be in the form of a report (or statement, or record, or response) 105, the report comprising the information on (or answering) the query.

As the query may be relevant for (or may apply to) one or more of the targets 103a, 103b, 103c, 103d, it is desired for the resulting report 105 to comprise one or more report portions 107a, 107b, 107c, 107d, each report portion comprising information about (or relevant for, or in response to, or related to) a different respective one of the one or more of the targets 103a, 103b 103c, 103d that the query may be relevant for. In this way, a user can obtain all of their desired information at once, via a single query/report, rather than individual queries/reports.

In the scenario illustrated in figure 1, it is also desired to be able to update the report 105 in response to a change of the (or in the) one or more of the targets 103a, 103b, 103c, 103d relevant for the query.

For example, at a first time T₀, there may be three existing targets 103a, 103b, 103c and the structured data object 100 therefore comprises three data portions 101a, 103b, 103c. Each of these data portions corresponds to (or comprises data on/for) a respective target (or entity) 103a, 103b, 103c. In particular, in figure 1, a first data portion 101a comprises data on (of related to or of or for or which corresponds to) target 103a, a second data portion 101b comprises data on (or related to or of or for or which corresponds to) target 103b, and a third data portion 101c comprises data on (or related to or of or for or which corresponds to) target 103c. Each target 103a, 103b, 103c may be of a particular type or class (i.e. having at least one commonality or similarity).

At time T₀, it is desired to obtain information about the structured data object 100 and a (first) query is performed on the structured data object 100 to generate a report 105 from which that information can be determined. The query is performed via execution of a stored routine. Each of targets 103a, 103b, 103c is relevant for the (first) query. Thus, it is desired for the report 105 generated in response to said (first) query to comprise a respective report portion 107a, 107b, 107c, for each of the targets 103a, 103b, 103c.

At a second time T₁ (later than time T₀), a new target 103d of the particular type or class (i.e. a target having at least one commonality or similarity with existing targets 103a, 103b, and 103c) is instantiated (or is generated or occurs). The new target 103d may be instantiated automatically or in response to user input. Data can then be obtained on the new target 103d, again automatically or via user input.

The structured data object can then be (is then) updated to account for the instantiation (or generation or occurrence) of the new target 103d, again automatically or in response to user input.

The update of the structured data object 100 to account for the instantiation (or generation or occurrence) of the new target 103d comprises generating (or receiving) an additional data portion 101d within the structured data object 100, the new data portion comprising the data on (or for, or relevant to, or associated with) the new target 103d. In figure 1, new data portion 101d is generated (or created or received) which comprises data on (or related to or of or for or which corresponds to) the new target 103d.

After time T₁, it is desired to obtain the same type of information about the structured data object 100 as obtained at time T₀ - now accounting for any changes to the structured data object 100 (in response to change in or to the targets 103a, 103b, 103c, 103d - for example, the addition of new target 103d). To achieve this, the (first) query is performed again on the structured data object 100 to generate a (updated) report 105. Again, the query is performed via execution of the stored routine. Each of targets 103a, 103b, 103c and 103d is now relevant for the query. Thus, it is desired for the report 105 generated in response to said query to comprise a respective report portion 107a, 107b, 107c, 107d for each of the targets 103a, 103b, 103c, 103d (i.e. including the new target 103d).

For such a report 105 to be generated, systems and methods for applying the stored routine to the structured data object 100 must be able to account for the addition of the new data portion 103d, such that the (updated) report comprises the additional information corresponding to new data portion 103d that is relevant for the query.

Such systems and methods, in accordance with the invention, are described below.

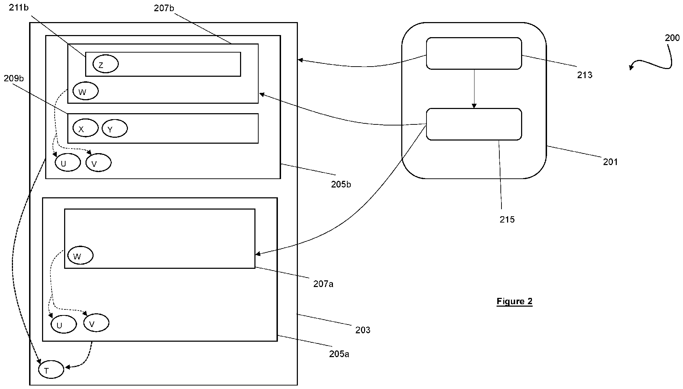

**Figure 2** shows a schematic arrangement of an example system 200 for applying a stored routine to a plurality of blocks of a structured data object, such as structured data object 100. The system 200 is configured to be able to account for changes in the underlying structured data object over time.

The system 200 comprises an execution module 201 and the structured data object 203. The structured data object 203 is dynamically updatable.

The structured data object 203 comprises a plurality of blocks (or sections) 205a, 207a, 205b, 207b, 209b, and 211b.

One or more of the blocks may comprise one or more further blocks (or sections), which themselves may comprise one or more further blocks (or sections). In this way, the plurality of blocks 205a, 207a, 205b, 207b, 209b, 211b can be said to be arranged as (or configured as or comprise) one or more block nests (or nests of blocks), a block nest being a plurality of blocks wherein one of the plurality of blocks contains within it (directly or indirectly) all other blocks of that nest. For example, with reference to figure 2, blocks 205b, 207b and 211b may be said to be arranged as one block nest. Additionally or alternatively, blocks 205b, 207b, 211b and 209b may be said to be arranged as one block nest. Additionally or alternatively, blocks 205b and 209b may be said to be arranged as one block nest. It will be appreciated that there are many other possible block nests that can be identified from figure 2.

Alternatively, it will be appreciated that the one or more blocks may be said to be (or viewed as being) arranged as trees of blocks (as opposed to nests of blocks). In each respective block tree (structure), each block within that block tree corresponds to (or is, or may be viewed as) a respective node. A block comprising one or more further blocks can be considered as a parent node in respect of those one or more further blocks, the one or more further blocks being child nodes of the parent node.

One or more of the plurality of blocks comprises an instance of (or value associated with) one or more block variables Z, W, X, Y, U, V, T. A block variable is a variable defined within (or instantiated by or within) a block. The value of these block variables (i.e. the particular instance of the block variables) may be set via user input or set automatically (or according to predefined rules) based on the data portion association with that block (or a block nest including that block).

Each block (or block nest) may correspond to (or comprise data on/for) a respective target (or entity). In this way, each block (or block nest) can be seen as comprising (or being associated with) a data portion comprising information about (or relevant for, or in response to, or related to) a (different) respective target (or entity). The data portion for a block may be used to assign a value to one or more block variables of that block.

Block nests of the structured data object 203 may be based on (or defined by) a template. The template (optionally, in combination with data of the respective data portion for that block nest) may define (at least): a) the number of blocks within the block nest (or subset of the block nest); b) the structure of the block nest (or subset of the block nest) (e.g. the relative arrangement of the blocks, the number of layers and the like); and c) the block variables for each block of that block nest (as well as the structure/arrangement of block variables within the blocks).

Since the definition (or instantiation) of a given block nest may depend on, in addition to the template, the data of the data portion for (or associated with) that block nest, and hence the target associated with (or of) that block nest, different block nests defined by the same template may have some differences. For example, the template may define (or set up) the types of possible blocks of a block nest, the relative structure/arrangement of those blocks, and the block variables for each block - however, the exact blocks (and the number of blocks/layers) from the possible blocks defined by the template may be determined based on the data of the data portion for that block nest.

More than one block nest of the structured data object 203 may be defined by the same template - that is, the same template can be used to define or instantiate one or more block nests. Additionally or alternatively, one or more block nests of the structured data object 203 may be defined by a different template than another one of the block nests of the structured data object 203.

The above is described in the context of a template being utilised to define (or instantiate) a block nest (i.e. a plurality of blocks and their relative arrangement). However, it will also be appreciated that a template could be additionally or alternatively used to define (or instantiate) individual blocks. That is, different templates may be used to define different components of a structured data object 203 - the scope of the template being defined by that template.

When more than one block (or block nest) is defined by a given template, then the structured data object 203 may comprise duplicate block variables (or duplicate blocks). Duplicate block variables are variables having the same variable name and being defined by the same template. Similarly, duplicate blocks are blocks defined by the same template, and may comprise duplicate block variables. Duplication of block variables and/or blocks may arise because, for example, the given template may define that a block (or block nest) based on (or instantiated by) that template may comprise a particular block variable 'A' (optionally, dependent on the data portion of - or associated with - that block or block nest) - the value associated with that block variable (i.e. a specific instance of that block variable) 'A' being block (or block nest) specific and dependent on the data portion of (or associated with) that block (or block nest). In this example, if a structured data object 203 comprises a number of blocks (or block nests) generated based on (or instantiated by) the given template, the structured data object 203 may comprise up to that number of block variables denoted (or named as or defined as) 'A'. This is because all blocks (or block nests) defined by the given template may comprise an instance of block variable 'A'-whether or not a given block (or block nest) does comprise such an instance being determined based on the data of (or associated with) the respective data portion for that block or block nest (and the template). To avoid confusion, each template may comprise a single definition of a given named block variable, e.g. block variable 'A'.

The use of templates to produce one or more blocks (or block nests or block trees) for a given target (or entity) as described above means that the structured data object 203 can be readily updated or amended to account for (or in response to) generation or identification of a new target. That is, new blocks (or block nests or block trees) can be added to the structured data object 203, based on an appropriate template (which may be selected automatically or via user input).

In addition, the use of templates advantageously allows one or more blocks (or block nests or block trees) for (or corresponding to) a given target (or entity) to be readily updated or amended to account for (or in response to) modification to or changes in that target (or entity). That is, where the block(s) (or block nests or block trees) for (or corresponding to) a given target (or entity) are generated based on a template and data of the respective data portion for the respective block(s) (or block nests or block trees), when the data changes, the template automatically creates, deletes or modifies that block (or those blocks or that block nest or that block tree) by adding, deleting, or modifying blocks and/or block variables. This allows for dynamic updates to the structured data object 203 based on real-time changes to the targets for that structured data object 203.

The use of templates to produce one or more blocks (or block nests or block trees) for a given target (or entity) as described above means that the structured data object 203 can be readily updated or amended to account for (or in response to) deletion, cancellation, or removal of a target. That is, block(s) (or block nests or block trees) corresponding to that target can be deleted from (or archived in) the structured data object 203.

While the use of templates as described above is advantageous in allowing the structured data object 203 to be quickly and easily updated in response to changes in its targets, in some cases, it results in duplication of block variables - because each instance of a block (or block nest or block tree) generated by a given template may comprise an instance of one or more of the block variables defined by that template. For example, as illustrated in figure 2, structured data object 203 has two instances of block variables denoted (named or defined as) U, two instances of block variables denoted (named or defined as) V, and two instances of block variables denoted (named or defined as) W.

To account for this, and for the stored routine to be executed as intended/correctly, without confusion between block variables (i.e. where there are duplicate variables, assigning the correct one as per a stored routine) so that the stored routine can be implemented as intended and sections of an output are grouped based on their respective target as appropriate, the system 200 comprises the execution module 201. The execution module 201 is configured to apply (or execute) a stored routine to (or on) a plurality of blocks 205a, 205b, 207a, 207b, 209b, 211b of a structured data object 203.

In general, a stored routine comprises a series of operations or rules, these operations or rules reference (or are configured to be applied to, or use, or call, or include the data of) one or more variables. In this way, the stored routine, when executed, implements the processing of one or more execution variables - the execution variables being the variables called by (or referenced by) the stored routine. Each execution variable may have a match among the one or more block variables of the structured data object 203. An execution variable may be a match for a block variable if that execution variable and that block variable have the same variable name (or definition). For example, execution variables Z, W and V may be matches for block variables defined as Z, W and V respectively because they have the same variable name (or definition).

The execution module 201 comprises an identification module 213 and an implementation module 215.

The identification module 213 is configured to identify one or more first (innermost) nested blocks, each first nested block comprising a block variable match for an execution variable. As each first (innermost) nested block is identified based (in part) on the execution variables, the identification module 213 is configured to identify the one or more first (innermost) nested blocks with respect to the stored routine.

These first (innermost) nested blocks comprise an instance of a block variable that is a match for an execution variable called (or implemented by) an operation or rule of the stored routine. In other words, each first (innermost) nested block is a block comprising an instance of one or more block variables affected by the stored routine. In addition, each first (innermost) nested block may be a block which comprises no other block nested within it which itself comprises instance of one or more block variables affected by that stored routine - i.e. a block which comprises no other block nested within it which itself comprises a block variable match for one or more (or any) of the execution variables of that stored routine.

It will be appreciated that, when (or if) the blocks are considered as (or viewed as) block trees (as opposed to a block nests), the first (innermost) nested block can be considered as a leaf node of the tree (with respect to the stored routine). That is, a leaf node with respect to the stored routine is a node of a block tree which comprises an instance of one or more block variables affected by the stored routine and optionally, has no child nodes comprising a block variable match for one or more (or any) of the execution variables of that stored routine.

For example, with reference to figure 2 and a given stored routine which calls (or references or implements) execution variables W and V these execution variables matching, where present in a block nest, block variables W, and V respectively), there may be two first (innermost) nested blocks; blocks 207a and 207b. These blocks comprise an instance of a block variable match for an execution variable (in both cases, an instance of block variable W), but do not comprise any blocks within them which themselves comprise an instance of a block variable match for an execution variable (e.g. Block 207b comprises block 211b within it, but block 211b comprises an instance of block variable Z only, which is not a block variable match for an execution variable of that given stored routine).

To illustrate another example with reference to figure 2 - if a stored routine were to call execution variable U only, this execution variable matching, where present in a block nest, block variable U, then structured data object 203 may have two first (innermost) nested blocks: blocks 205a and 205b. These blocks comprise an instance of a block variable match for an execution variable (in both cases, an instance of block variable U), but do not comprise any blocks within them which themselves comprise an instance of a block variable match for an execution variable (e.g. block 205b comprises blocks 207b, 209b and 211b within it - but none of these comprise an instance of block variable U).

There are many different ways in which the identification module 213 may identify the first (innermost) nested block(s) affected by the stored routine.

For example, the stored routine may comprise or be associated with an indication of the first (innermost) nested blocks and/or an indication of the execution variable that is instantiated (directly) within the first (innermost) nested blocks. This could be as a 'tag' or 'note' on the stored routine. From an identification of the execution variable, it will be appreciated that there are many different ways that the corresponding first (innermost) block can be determined.

Additionally or alternatively, the identification module 213 may generate, for each respective stored routine and structured data object 203, a table including an identification of (all) instances of each block variable having a block variable match for an execution variable of that stored routine, as well as, for each instance of each such block variable: a) the block in which that respective instance of that block variable is instantiated, and b) an identification of any blocks nested within that block. For each identified block nest, the identification module 213 can then identify, for example, from the table, which block(s) contain an (i.e. at least one) instance of a block variable having a block variable match for an execution variable for that stored routine, and (optionally) also no (further) blocks within it (them) in which there is an instance of any block variable having a block variable match for any execution variable of that stored routine . Those block(s) may then be identified as the innermost nested block(s) affected by that stored routine. It will be appreciated that other searching means would be suitable determining the first (innermost) nested blocks.

Each stored routine may be associated with (or have) any number of first (innermost) nested blocks.

The implementation module 215 is configured to, for each first (innermost) nested block identified by the identification module 213 as affected by a stored routine, execute the stored routine on the (that) respective first (innermost) nested block (and optionally a block nest associated with it). This executing of the stored routine comprises for each respective one of one or more execution variables (that the stored routine, when implemented, executes the processing of): in response to (or if there is) a block variable match for the respective execution variable in the first (innermost) nested block, assigning a value of that matched block variable to the respective execution variable; and in response to there being (or if there is) no block variable match for the respective execution variable in (or from) the first (innermost) nested block, recursively searching outwards from (or with respect to) the first (innermost) nested block for a block variable match for the respective execution variable.

To recursively search outwards in (or on or from) the respective block nest, the implementation module 215 is configured to identify (where present) a second block that the respective first (innermost) nested block is contained (directly) within, and determine if (or whether) there is a block variable match for the respective execution variable from that second block. In response to there being (or if there is) a block variable match for the respective execution variable from that second block, the implementation module 215 is configured to assign the value of that matched block variable to the respective execution variable. In response to there being (or if there is) no block variable match for the respective execution variable from (or in) that second block, the implementation module 215 is configured to recursively search outwards from (or with respect to) the second block for a block variable match for the respective execution variable. This involves identifying (where present) a third block that the respective second (nested) block is contained (directly) within, and determining if (or whether) there is a block variable match for the respective execution variable from that third block In response to there being (or if there is) a block variable match for the respective execution variable from that third block, the implementation module 215 is configured to assign the value of that matched block variable to the respective execution variable. In response to there being (or if there is) no block variable match for the respective execution variable from that third block, the implementation module 215 is configured to recursively search outwards from (or with respect to) the third block for a block variable match for the respective execution variable. Again, the recursive search outwards comprises iteratively searching blocks of the next block layer for a match. The iteration may end when the final block searched is not itself contained within a block - e.g. all blocks of the relevant block nest have been searched.

It will be appreciated that, when the invention is viewed as a block tree (as opposed to a block nest), the recursively search outwards is performed in (or on or from) the respective block tree. Here, the implementation module 215 can be viewed as being configured to identify (where present) a second block that is the parent block for the respective leaf node, and determine if (or whether) there is a block variable match for the respective execution variable from that second block. In response to there being (or if there is) a block variable match for the respective execution variable from that second block, the implementation module 215 can be viewed as being configured to assign the value of that matched block variable to the respective execution variable. In response to there being (or if there is) no block variable match for the respective execution variable from (or in) that second block, the implementation module 215 is configured to recursively search outwards from (or with respect to) the second block for a block variable match for the respective execution variable. This involves identifying (where present) a third block that is the parent block the respective second block, and determining if (or whether) there is a block variable match for the respective execution variable from that third block. In response to there being (or if there is) a block variable match for the respective execution variable from that third block, the implementation module 215 can be viewed as being configured to assign the value of that matched block variable to the respective execution variable. In response to there being (or if there is) no block variable match for the respective execution variable from that third block, the implementation module 215 can be viewed as being configured to recursively search outwards from (or with respect to) the third block for a block variable match for the respective execution variable. Again, the recursive search outwards comprise iteratively searching out from parent, to grandparent, to great-grandparent node etc. for a match. This recursive searching outwards could also be viewed as recursive searching up the block tree from the leaf node.

In some examples, responsive to there being (or if there is) no block variable match for the respective execution variable in any blocks of a (or any possible) nest (or tree) comprising the first (innermost) nested block (or leaf node). That is, the recursive searching has been performed until a block is reached which itself is not contained within a further block, and no block variable match for a respective execution variable has been found, then the implementation module 215 may search for a match for the respective execution variable among variables of the structured data object 203 outside of a (or the) block nest (or block tree),i.e. not present within any block. In other words, the implementation model may continue recursively searching outwards to variables instantiated outside of blocks, which may be applicable to the entire structured data object 203.

To illustrate this, for example, with reference to figure 2 and a given stored routine which calls (or references or implements) execution variables W, U, V and T these execution variables matching, where present in a block nest, block variables W, U, V and T respectively, there may be two first (innermost) nested blocks; blocks 207a and 207b. These blocks comprise an instance of a block variable match for an execution variable (in both cases, an instance of block variable W), but do not comprise any blocks within them which themselves comprise an instance of a block variable match for an execution variable (e.g. Block 207b comprises block 211b within it, but block 211b comprises an instance of block variable Z only, which is not a block variable match for any execution variable of that given stored routine).

For block 207a, the block variable match for execution variable W can be found in the first (innermost) nested block (block 207a). Therefore, the value of execution variable W is assigned the value of the instance of block variable W in block 207a. Block variables U, V and T cannot be found in block 207a (that respective first nested block) so the implementation module recursively searches outwards from block 207a. This recursive search comprises next searching the block that the first (innermost) nested block is contained directly within - block 205a. The block variable match for execution variables U and V can be found in block 205a. Therefore, the value of execution variables U and V are assigned the value of the instance of block variables U and V in block 205a respectively. Block variable T cannot be found in block 205a so the implementation module recursively searches outwards from block 205a. Block 205a is itself not contained within another block, so the recursive search comprises searching the structured data object for (block) variables not contained within a block / outside of a block nest. The (block) variable match for execution variable T can be found in structured data object 203 outside of a block. Therefore, the value of execution variable T is assigned the value of the instance of (block)variable T in the structured data object (for block 207a as the first nested block).

For block 207b, the block variable match for execution variable W can be found in the first (innermost) nested block (block 207b). Therefore, the value of execution variable W is assigned the value of the instance of block variable W in block 207b. Block variables U, V and T cannot be found in block 207b (that respective first nested block) so the implementation module recursively searches outwards from block 207b. This recursive search comprises next searching the block that the first (innermost) nested block is contained directly within - block 205b. The block variable match for execution variables U and V can be found in block 205b. Therefore, the value of execution variables U and V are assigned the value of the instance of block variables U and V in block 205b respectively. Block variable T cannot be found in block 205b so the implementation module recursively searches outwards from block 205b. Block 205b is itself not contained within another block, so the recursive search comprises searching the structured data object for (block) variables not contained within a block / outside of a block nest. The block variable match for execution variable T can be found in structured data object 203 outside of a block. Therefore, the value of execution variable T is assigned the value of the instance of (block) variable T in the structured data object (for block 207b as the first nested block).

This illustrates the duplicate processes for duplicate blocks generated by the same template (for the same stored routine). Via this process, the system 200 may be configured to output two sections of data/information/conclusions - the first relating to first nested block 207b (and its recursive block nest) and the second relating to first nested block 207a (and its recursive block nest). These corresponding duplicate blocks and their respective recursive block nests may relate to different targets, and therefore the output (or report) that may result from the stored routine may have a section of data/information/conclusions per target. These sections may be output to a user,in the form of a report or otherwise. The output may be used (or configured to be used) in further processing - for example it may be fed into a control system to effect change to the targets.

As set out above, the execution module 201 is configured (via its arrangement/ability to identify first (innermost) nested block(s), and then recursively (or iteratively) search outwards) to apply (or perform) the stored routine to individual block nests (e.g. one block nest at a time - though it would be appreciated that application to individual block nests could also be performed in parallel). This means that the system 200 can readily account for changes in the number of blocks or block nests without confusing variables or mixing variables between blocks or block nests. As each block nest may represent (or be related to or associated with) a different target, this configuration of the execution module 201 allows the operations or rules of the stored routine as applied to variables related to a given target to be identified and grouped, and therefore for the results of those operations or rules to be readily output to the user as being associated with that given target.

As set out above, the execution module 201 is also configured (via its arrangement/ability to identify one or more first (innermost) nested block(s) affected by the stored routine, and then, for each first nested block, begin searching for block variable matches starting from that first nested block and then iteratively outwards (to the outer blocks of a respective nest) to apply (or perform) the stored routine efficiently for each target, searching the most relevant blocks for that structured data object and that stored routine. Also, this configuration ensures that all blocks which may be relevant for a stored routine (and associated targets) are searched for block variable matches, and thus that each target is correctly represented by the matched execution variables (and the values of their respective matched block variables) in any output or report. That is, the stored routine is executed as intended.

The structured data object 201 may comprise duplicate block variables, because the structured data object 201 may comprise more than one block nest instantiated by a given template, but for each recursive search operation, each of these duplicate variables will be matched at most once. This is because the block nest (recursively searched) will be defined/determined based on that stored routine and the identified first (innermost) nested block.

It will be appreciated that the system 200 may be configured to implement many different stored routines on the structured data object 201 and that the system is not tied to or limited to any given stored routine.

It will be appreciated that the structured data object 203 and the execution module 201 may be implemented on computer systems. The structured data object 203 and the execution module 201 may be implemented on the same or on different computer systems. Within the execution module 201, the identification module 213 and the implementation module 215 may be implemented on the same or different computer systems.

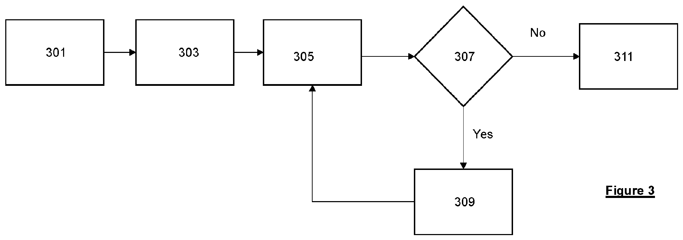

**Figure 3** is a flow diagram schematically illustrating a general method 300 for (or of) applying a stored routine to a plurality of blocks of a structured data object. Method 300 may be implemented using system 200 described above.

In method 300, the plurality of blocks are configured as one or more block nests. In method 300, one or more of the plurality of blocks comprises an instance of one or more block variables. In method 300, the stored routine, when executed, implements the processing of one or more execution variables (optionally, each execution variable having a match among the one or more block variables).

In method 300, a first step 301 comprises identifying one or more first (innermost) nested blocks, each first nested block comprising a block variable match for an execution variable (i.e. the first step 301 may comprise identifying first (innermost) nested block(s) with respect to the stored routine / affected by the stored routine). That is, the identifying the one or more (first) innermost nested blocks may comprising identifying one or more blocks comprising an instance of one or more block variables affected by the stored routine (e.g. one or more block variables having a block variable match for an execution variable of that stored routine). Each identified first (innermost) nested block may comprise no other block nested within it which itself comprises instance of one or more block variables affected by that stored routine. Identifying each first (innermost) nested block may be performed by an identification module of an execution module (such as identification module 213) as described above. As described above, identifying one or more first (innermost) nested blocks can alternatively be viewed as identifying one or more leaf nodes with respect to the stored routine.

In method 300, a second step 303 comprises selecting a first one of one or more first (innermost) nested blocks. This selection may be random, or may be determined via a preset rule, e.g. select the first nested blocks in an order related to the size of the data in those blocks, or the position of those blocks within the structured data object.

In method 300, a third step 305 comprises, for the selected one of the one or more first (nested) blocks (affected by the stored routine), executing the stored routine on (or starting from) that respective first nested block. The executing comprises: in response to (or if there is) a block variable match for the respective execution variable in the selected first nested block, assigning a value of that matched block variable to the respective execution variable; and in response to there being (or if there is) no block variable match for the respective execution variable in the selected first nested block, recursively searching outwards from (or with respect to) that first nested block for a block variable match for the respective execution variable. The stored routine may be performed by an implementation module of an execution module (such as implementation module 215) as described above.

In particular, recursively searching outwards from the respective one or more first (innermost) nested blocks may comprise recursively searching outwards to the limit of a block nest comprising the first (innermost) nested block (i.e. the recursion stops when a block is reached which itself is not contained within another block) and optionally, recursively searching outwards beyond the limit of the block nest (i.e. after searching the block nest comprising the first (innermost) nested block, searching any variables of the structured data object not contained within (or instantiated within) a block).

It will be appreciated that instead of viewing the above-described method (and the invention more generally) as identifying a first (innermost) nested block and recursively searching outwards from that identified first nested block (on a block nest), it could instead be viewed as identifying a leaf node of a tree of nodes and recursively searching up (or outwards on) the tree of nodes (here, nodes being equivalents of blocks).

In method 300, a fourth step 307 comprises, determining whether there are any further (or more) of the identified first (innermost) nested blocks (affected by the stored routine), for which step 305 has not been performed (or which step 305 has not been performed on).

If no (i.e. in response to step 307 the determination is negative), then the method 300 terminates (i.e. the method 300 proceeds to a fifth step 311 - step 311 comprises terminating the method).

If yes (i.e. in response to step 307 the determination is positive), then the method 300 proceeds to step 309. In method 300, a sixth step 309 comprises, selecting one of the identified one or more first (innermost) nested blocks for which step 305 has not been performed (or which step 305 has not been performed on). Following the sixth step 309, the third step 305 is performed on the new selected first (innermost) nested block. Thereby, steps 305, 307 and 309 are iteratively repeated on different selected blocks until step 305 has been performed on all identified first (innermost) nested blocks.

It will be appreciated that this method may be performed by (or on) a computer system, which may be a cloud-based computer system such as described below.

In method 300, the plurality of blocks may comprise duplicate blocks.

In method 300, each block may be defined by a predetermined template. The duplication of blocks may arise where multiple blocks of the structured data object are based on (or instantiated by) the same template. There may be many different templates defining different blocks within a structured data object. A template may be used to define a block or a nest of blocks (a block nest). A template may relate to (or correspond to) a given target (or entity).

In method 300, there may be a further step comprising: generating one or more of the blocks using a predetermined template. This seventh step may be performed automatically or in response to user input - i.e. the user may select the appropriate template based on a change in a target.

Additionally or alternatively, in method 300, there may be a further step comprising: providing a user interface; receiving user input from the user interface; and setting or updating an instance of (a value associated with) one or more of the block variables based on the user input. In this way, the user can dynamically update/alter the structured data object via the user interface.

Method 300 may further comprise updating a display of the user interface based on the user input. For example, for each of the respective blocks of the structured data object: the structured data object may be associated with one or more questions; one or more of the questions may be displayed to the user; and one or more block variable instance of the respective block may correspond to a respective user input answer to a respective one of the one or more questions. The updating of the display may comprise changing the questions displayed to the user. Changing the questions displayed to the user may comprise displaying an additional question.

Additionally or alternatively, in method 300 there may be a further step of outputting a report (or a response or a record or a description or a specific data output) comprising: for one or more of the identified first nested blocks, a respective section of the report comprising information based on the matched (block) variables associated with that respective first nested block. The content of the report may be dynamically updated based on the user input (e.g. because the instance/value of the matched (block) variable is updated based on the user input).

Additionally or alternatively, in method 300, the number of blocks of the structured data object can be dynamically altered via user input. This user input may be via the user interface described above.

It will be appreciated that there may be a system comprising one or more processors configured to perform method 300. There may also be a computer program comprising instructions which, when executed by one or more processors, cause the one or more processors to carry out method 300. The computer program may be stored on (or by) a computer readable medium.

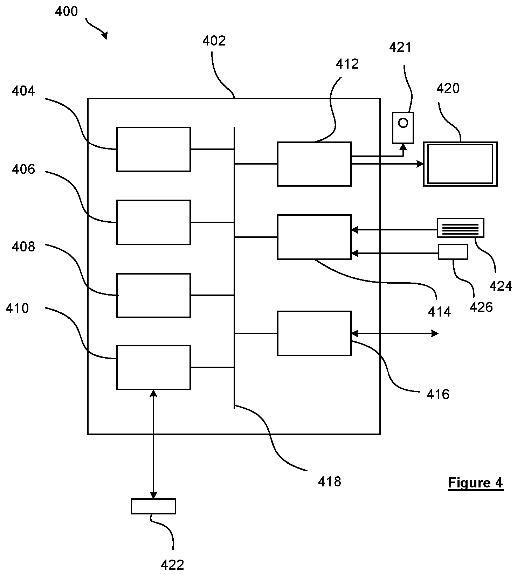

**Figure 4** schematically illustrates an example of a computer system 400. The system 400 comprises a computer 402. This computer system 400 may be used to implement the system 200 of figure 2 and/or the method 300 of figure a. The computer 402 comprises: a storage medium 404, a memory 406, a processor 408, an interface 410, a user output interface 412, a user input interface 414 and a network interface 416, which may be linked together over one or more communication buses 418.

The storage medium 404 may be any form of non-volatile data storage device such as one or more of a hard disk drive, a magnetic disc, a solid-state-storage device, an optical disc, a ROM, etc. The storage medium 404 may store an operating system for the processor 408 to execute in order for the computer 402 to function. The storage medium 404 may also store one or more computer programs (or software or instructions or code).

The memory 406 may be any random access memory (storage unit or volatile storage medium) suitable for storing data and/or computer programs (or software or instructions or code).

The processor 408 may be any data processing unit suitable for executing one or more computer programs (such as those stored on the storage medium 404 and/or in the memory 406), some of which may be computer programs according to embodiments of the invention or computer programs that, when executed by the processor 408, cause the processor 408 to carry out a method according to an embodiment of the invention and configure the system 400 to be a system according to an embodiment of the invention. The processor 408 may comprise a single data processing unit or multiple data processing units operating in parallel, separately or in cooperation with each other. The processor 408, in carrying out data processing operations for embodiments of the invention, may store data to and/or read data from the storage medium 404 and/or the memory 406.

The interface 410 may be any unit for providing an interface to a device 422 external to, or removable from, the computer 402. The device 422 may be a data storage device, for example, one or more of an optical disc, a magnetic disc, a solid-state-storage device, etc. The device 422 may have processing capabilities - for example, the device may be a smart card. The interface 410 may therefore access data from, or provide data to, or interface with, the device 422 in accordance with one or more commands that it receives from the processor 408.

The user input interface 414 is arranged to receive input from a user, or operator, of the system 400. The user may provide this input via one or more input devices of the system 400, such as a mouse (or other pointing device) 426 and/or a keyboard 424, that are connected to, or in communication with, the user input interface 414. However, it will be appreciated that the user may provide input to the computer 402 via one or more additional or alternative input devices (such as a touch screen). The computer 402 may store the input received from the input devices via the user input interface 414 in the memory 406 for the processor 408 to subsequently access and process, or may pass it straight to the processor 408, so that the processor 408 can respond to the user input accordingly.

The user output interface 412 is arranged to provide a graphical/visual and/or audio output to a user, or operator, of the system 400. As such, the processor 408 may be arranged to instruct the user output interface 412 to form an image/video signal representing a desired graphical output, and to provide this signal to a monitor (or screen or display unit) 420 of the system 400 that is connected to the user output interface 412. Additionally or alternatively, the processor 408 may be arranged to instruct the user output interface 412 to form an audio signal representing a desired audio output, and to provide this signal to one or more speakers 421 of the system 400 that is connected to the user output interface 412.

Finally, the network interface 416 provides functionality for the computer 402 to download data from and/or upload data to one or more data communication networks.

It will be appreciated that the architecture of the system 400 illustrated in figure 4 and described above is merely exemplary and that other computer systems 400 with different architectures (for example with fewer components than shown in figure 4 or with additional and/or alternative components than shown in figure 4) may be used in embodiments of the invention. As examples, the computer system 400 could comprise one or more of: a personal computer; a server computer; a mobile telephone; a tablet; a laptop; a television set; a set top box; a games console; other mobile devices or consumer electronics devices; etc. Additionally, it is possible that some components of the computer system 400 are not located in the computer 402 and are, instead, part of a computer network connected to the computer 402 via the network interface 416. Additionally or alternatively, the computer system 400 may comprise multiple computers 402, e.g. in a network of computers such as a cloud system of computing resources.

### Example 1

In a first example, the method 300 is applied to generate, from a structured data object comprising information about a company, an output (report) on company information, including information on the directors of that company. The number of directors may change over time, and the structured data object is designed (as described above) to accommodate this.

In particular, the stored routine of example 1 defines rules (or operations) for creating the reports (based on the stored routine and the structured data object). In the stored routine, there are rules to amend the layout of the report based on values (or input) entered via a user interface. To efficiently evaluate the rules, the stored routine needs to be able to search across the relevant portions of the structured data object to find the relevant matched variables.

The method is applied by a system for applying a stored routine to a plurality of blocks of a structured data object. The system comprises the structured data object and an execution module. The system may be system 200 as described above.

A structured data object for this example is shown below.

| **Structured data object (initial templated object)** | | | |
|---|---|---|---|
| **[1] Basic Information** | | | |
| | [1.q1] Company name? | | |
| | [1.q2] Place of business? | | |
| | | | |
| | **[2] Director 1** | | |
| | | [2.q1] Director's Name? | |
| | | [2.q2] Are they at head office? | |
| | | [2.q3] Where do they work? | |
| | | | |
| | | **[2.1] Non head-office** | |
| | | | [2.1.q1] Why are they not based in the head office? |

At a time t₀, the structured data object initially comprises blocks [1], [2] and [2.1].

Block [1] comprises (or relates to or corresponds to) a data portion of the structured data object comprising 'basic information' about the company. The target (entity) of block [1] is basic information about the company. Block [1] was instantiated by (based on) a first template.

Block [2] comprises (or relates to or corresponds to) a data portion of the structured data object comprising information about a 1st director of the company. The target (entity) of block [2] is information about the 1st director of the company. Block [2] was instantiated by (based on) a second template. Block [2] is contained within (nested within) block [1].

Block [2.1] comprises (or relates to or corresponds to) a data portion of the structured data object comprising information about the 1st director of the company. The target (entity) of block [2] is information about the 1st director of the company. Block [2] was instantiated by (based on) the second template. Block [2.1] is contained within (nested within) block [2].

At time t₀, the structured data object comprises no data, so the data portions described above are empty and no variables are instantiated.

(Each) block [1] is configured to comprise an instance of (up to) 2 block variables: [1.q1] and [1.q2]. Block variable [1.q1] is associated with a question "Company name?" (question [1.Q1]), and is instantiated by a response to question [1.Q1] for that block). Block variable [1.q2] is associated with a question "Place of business?" (question [1.Q2], and is instantiated by a response to question [1.Q2] for that block).

Block [2] is configured to comprise an instance of (up to) 3 block variables: [2.q1] and [2.q2] and [2.q3]. Block variable [2.q1] is associated with a question "Director's Name?" (question [2.Q1] and is instantiated by a response to question [2.Q1] for that block). Block variable [2.q2] is associated with a question "Are they at head office?" (question [2.Q2] and is instantiated by a response to question [2.Q2] for that block)). Block variable [2.q3] is associated with a question "Where do they work?" (question [2.Q3] and is instantiated by a response to question [2.Q3] for that block).

Block [2.1] is configured to comprise an instance of 1 block variable: [2.1.q1]. Block variable [2.1.q1] is associated with a question "Why are they not based in the head office?" (question [2.1.Q1]), and is instantiated by a response to question [2.1.Q1] for that block).

As there is no data in the structured data object, at time t₀, no block variables are instantiated.

The system further comprises a user interface, via which (or through which or into which) the user can provide input to the system.

The user interface is configured such that the user can provide free text in response to (associated with) questions [1.Q1], [1.Q2], [2.Q1].and [2.1.Q1].

The user interface is configured such that, in response to question [2.Q2], the user can (must) provide an answer/input selected from "Yes", "Same country", and "Different country". These answers/inputs are predetermined and presented to the user as a drop-down box.

At time t₀, the user interface is configured to display an indication of blocks [1] and [2] as well as the questions [1.Q1], [1.Q2], and [2.Q1]. The questions are visibly associated with a block. As shown below, questions [1.Q1] and [1.Q2] are shown under a heading "[1] Basic Information" (to show they are associated with block [1]) and question [2.Q1] is shown under a heading "[2] Director " (to show it is associated with block [2]).

| **User interface t₀** | |
|---|---|
| **[1] Basic Information** | |
| | [1.Q1] Company name? |
| | [1.Q2] Place of business? |
| | |
| **[2] Director** | |
| | [2.Q1] Director's Name? |

Free text in response to questions [1.Q1] and [1.Q2] associated with block [1] instantiates and is assigned to block variables [1.q1] and [1.q2] for block [1] respectively.

Free text in response to question [2.Q1] associated with block [2] instantiates and is assigned to block variable [2.q1] for block [2].

In example 1, the stored routine comprises a first set of rules to modify the user interface in respect to user input via the user interface as follows:
**First set of Rules**
**[r1] Director has a name**
   Condition: [2.Q1] is answered
   Action: Show question [2.q2]
**[r2] Not** a **head office director.**
   Condition: [2.Q2] = Same Country
   Action: Show question [2.Q3]
**[r3] Overseas**
   Condition: [2.Q3] = Different Country
   Action: Show section [2.1]

The stored routine also comprises a second set of rules to produce a report (output).
**Second set of Rules**
**[R1] Company information output**
   Condition: for a given block, a value is assigned to [1.q1] and [1.q2] (i.e. these variables are instantiated)
   Action: Output to report section for that block *"[value assigned to [1.q1]] is based in [value assigned to [1.q2]]"*
**[R2] Head office director.**
   Condition: for a given block, a value is assigned to [2.q1] and [1.q2] (i.e. these variables are instantiated), and the value assigned to [2.q2] is "Yes".
   Action: Output to report section for that block *"[vaLue assigned to [2.q1]] is based at the head office in [value assigned to [1.q2]]"*
**[R3] Non-Head office director (same country).**
   Condition: for a given block, a value is assigned to [2.q1], [1.q2] and [2.q3] (i.e. these variables are instantiated), and the value assigned to [2.q2] is "Same country".
   Action: Output to report section for that block *"[value assigned to [2.q1]] is not in the [value assigned to [1.q2]] head office but works from [value assigned to [2.q3]]"*
**[R4] Overseas**
   Condition: for a given block, a value is assigned to [2.q1], [1.q1], [1.q2] and [2.1.q1] (i.e. these variables are instantiated), and the value assigned to [2.q2] is "Different country".
   Action: Output to report section for that block *"[value assigned to [2.q1]] does not work in the same country as the [value assigned to [1.q2]] head office of [value assigned to [1.q1]]. [value assigned to [2.1.q1]]"*

The user can add a new block nest to the structured data object based on the second template via user input to the user interface - e.g. by clicking a 'new director' button.

The stored routine is configured to execute (or run) in response to any (new) user input.

At time t₁ > t₀, the user enters free text (a form of user input) into the user interface in response to questions [1.Q1], [1.Q2], and [2.Q1] as follows:

| **User interface t1** | |
|---|---|
| **[1] Basic Information** | |
| | [1.Q1] Company name? **Leo RegTech** |
| | [1.Q2] Place of business? **London** |
| | |
| **[2] Director** | |
| | [2.Q1] Director's Name? **Tom** |

In response to the user input, the execution module of the system executes the stored routine in accordance with method 300.

The stored routine implements the processing of execution variables [1.q1], [1.q2], [2.q1], [2.q2], [2.q3] and [2.1.q1] - since these variables are all referenced in conditions of the second set of rules.

These execution variables are block variable matches for block variables (defined as) [1.q1], [1.q2], [2.q1], [2.q2], [2.q3] and [2.1.q1] respectively.

At time t₁, the structured data object contains an instance of block variables [1.q1], [1.q2] and [2.q1] since the user has provided input to corresponding questions [1.Q1], [1.Q2] and [2.Q1]. Variables [1.q1] and [1.q2] are instantiated in block [1]. Variable [2.q1] is instantiated in block [2].

The identification module identifies that the first (innermost) nested block affected by the stored routine is block [2] - block [2] comprises an instance of a block variable match for an execution variable - variable [2.q1] (and does not contain a block nested within it which itself comprises an instance of any of block variables [1.q1], [1.q2], [2.q1], [2.q2], [2.q3] and [2.1.q1]).

The implementation module then executes the stored routine on the identified first block [2] as per method 300.

The condition for r1 in the first set of rules is met (in respect of block [2]), in response, the user interface is updated to show [2.Q2] as follows:

| | |
|---|---|
| **[1] Basic Information** | |
| | [1.Q1] Company name? **Leo RegTech** |
| | [1.Q2] Place of business? **London** |
| **[2] Director 1** | |
| | [2.Q1] Director's Name? **Tom** |
| | [2.Q2] Are they at head office? |

The condition for R1 of the second set of rules is met, (but no others).

The block variable match for execution variable [2.q1] can be found in the first (innermost) nested block (block [2]), and the value "Tom" is assigned to execution variable [2.q1] (for that first block [2]).

Block variables [1.q1] and [1.q2] cannot be found in block [2], so the implementation module recursively searches outwards from block [2]. This recursive search comprises next searching the block that the first (innermost) nested block is contained directly within - block [1]. The block variable match for execution variables [1.q1] and [1.q2] can be found in block [1]. The value "Leo RegTech" is therefore assigned to execution variable [1.q1] (for that first block [2]), and the value "London" is assigned to execution variable [1.q2] (for that first block [2]).

Thus, report output is generated and displayed to the user (via a user interface) as follows:

| **Report (t₁)** | |
|---|---|
| [2] | |
| | *Leo RegTech is based in London* |

At a time t₂ >t₁, the user enters additional text selected from a drop-down box into the user interface in response to question [2.Q2] for block [2] as follows:

| **User interface t₂** | |
|---|---|
| **[1] Basic Information** | |
| | [1.Q1] Company name? **Leo RegTech** |
| | [1.Q2] Place of business? **London** |
| **[2] Director** | |
| | [2.Q1] Director's Name? **Tom** |
| | [2.q2] Are they at head office? **Yes** |

In response to the user input, the execution module of the system executes the stored routine in accordance with method 300.

At time t₂, the structured data object contains an instance of block variables [1.q1], [1.q2], [2.q1], and [2.q2] since the user has provided input to corresponding questions [1.Q1], [1.Q2], [2.Q1] and [2.Q2]. Variables [1.q1] and [1.q2] are instantiated in block [1]. Variables [2.q1] and [2.q2] are instantiated in block [2].

The identification module identifies that the first (innermost) nested block affected by the stored routine is block [2] -block [2] comprises an instance of a block variable match for an (at least one) execution variable - variable [2.q1] and variable [2.q2] (and does not contain a block nested within it which itself comprises an instance of any of block variables [1.q1], [1.q2], [2.q1], [2.q2], [2.q3] and [2.1.q1]).

The implementation module then executes the stored routine on the identified first block as per method 300.

For block [2], in addition to R1 (as before), R2 is met.

The block variable match for execution variable [2.q1] can be found in the first (innermost) nested block (block [2]), and the value "Tom" is assigned to execution variable [2.q1] (for that first block [2]). The block variable match for execution variable [2.q2] can also be found in the first (innermost) nested block (block [2]), and the value "Yes" is assigned to execution variable [2.q1] (for that first block [2]).

Block variable [1.q2] cannot be found in block [2], so the implementation module recursively searches outwards from block [2]. This recursive search comprises next searching the block that the first (innermost) nested block is contained directly within - block [1]. The block variable match for execution variables [1.q1] and [1.q2] can be found in block [1]. The value "Leo RegTech" is therefore assigned to execution variable [1.q1] (for that first block [2]), and the value "London" is assigned to execution variable [1.q2] (for that first block [2]).

Thus, report output is generated and displayed to the user (via a user interface) as follows:

| | |
|---|---|
| **Report (t₂)** | |
| *[2] Leo RegTech is based in London* | |
| | *Tom is based at the head office in London.* |

At a time t₃ >t₂, the user enters user input to cause generation (or instantiation) of two new blocks, each based on the second template - these are block [2a] and block [2b] respectively.

| **Structured data object (with duplicated sections)** | | | |
|---|---|---|---|
| **[1] Basic Information** | | | |
| | [1.q1] Company name? **Leo RegTech** | | |
| | [1.q2] Place of business? **London** | | |
| | | | |
| | **[2] Director** | | |
| | | [2.q1] Director's Name? **Tom** | |
| | | [2.q2] Are they at head office? **Yes** | |
| | | [2.q3] Where do they work? | |
| | | | |
| | | **[2.1] Non head-office** | |
| | | | [2.1.q1] Why are they not based in the head office? |
| | | | |
| | **[2a] Director** | | |
| | | [2.q1] Director's Name? | |
| | | [2.q2] Are they at head office? | |
| | | [2.q3] Where do they work? | |
| | | | |
| | | **[2.1] Non head-office** | |
| | | | [2.1.q1] Why are they not based in the head office? |
| | | | |
| | **[2b] Director** | | |
| | | [2.q1] Director's Name? | |
| | | [2.q2] Are they at head office? | |
| | | [2.q3] Where do they work? | |
| | | | |
| | | **[2.1] Non head-office** | |
| | | | [2.1.q1] Why are they not based in the head office? |

Like block [2], block [2a] is configured to comprise an instance of (up to) 3 block variables: [2.q1] and [2.q2] and [2.q3]. Block variable [2.q1] is associated with a question "Director's Name?" (question [2.Q1] and is instantiated by a response to question [2.Q1] for that block)). Block variable [2.q2] is associated with a question "Are they at head office?" (question [2.Q2] and is instantiated by a response to question [2.Q2] for that block)). Block variable [2.q3] is associated with a question "Where do they work?" (question [2.Q3] and is instantiated by a response to question [2.Q3] for that block).

Block [2a] comprises (or relates to or corresponds to) a data portion of the structured data object comprising information about a 2nd director of the company. The target (entity) of block [2a] is information about the 2nd director of the company. Block [2a] was instantiated by (based on) a second template. Block [2a] is contained within (nested within) block [1] - as per the second template and the user input.

Like block [2], block [2b] is configured to comprise an instance of (up to) 3 block variables: [2.q1] and [2.q2] and [2.q3]. Block variable [2.q1] is associated with a question "Director's Name?" (question [2.Q1] and is instantiated by a response to question [2.Q1] for that block)). Block variable [2.q2] is associated with a question "Are they at head office?" (question [2.Q2] and is instantiated by a response to question [2.Q2] for that block)). Block variable [2.q3] is associated with a question "Where do they work?" (question [2.Q3] and is instantiated by a response to question [2.Q3] for that block).

Block [2b] comprises (or relates to or corresponds to) a data portion of the structured data object comprising information about a 3rd director of the company. The target (entity) of block [2b] is information about the 3rd director of the company. Block [2b] was instantiated by (based on) a second template. Block [2b] is contained within (nested within) block [1] - as per the second template and the user input.

The user interface is configured (according to the template and/or the stored routine) to display an indication of blocks [1], [2], [2a] and [2b] as well as the questions [1.Q1], [1.Q2], and [2.Q1] for each block. The questions are visibly associated with a block. As shown below, questions [1.Q1] and [1.Q2] are shown under a heading "[1] Basic Information" and question [2.Q1] is duplicated three times - once for each of blocks [2], [2a], and [2b]. In particular, [2.Q1] is shown under a heading "[2] Director", "[2a] Director" and "[2b] Director" respectively (to show which respective block the question is associated with - i.e. the question under the heading "[2] Director" is associated with block [2]).

| **User interface t₃** | |
|---|---|
| **[1] Basic Information** | |
| | [1.Q1] Company name? **Leo RegTech** |
| | [1.Q2] Place of business? **London** |
| | |
| **[2] Director** | |
| | [2.Q1] Director's Name? **Tom** |
| | [2.Q2] Are they at head office? **Yes** |
| | |
| **[2a] Director** | |
| | [2.Q1] Director's Name? |
| | |
| **[2b] Director** | |
| | [2.Q1] Director's Name? |

At time t₃, the user additionally enters free text (a form of user input) into the user interface in response to questions [2.Q1] for blocks [2a] and [2b].

In response to the user input, the execution module of the system executes the stored routine in accordance with method 300.

The condition for r1 in the first set of rules is therefore met in respect of blocks [2a] and [2b] in addition to block [2], In response, the user interface is updated to show two more instances of [2.Q2] - one associated with block [2a] (under the heading [2a]) and one associated with block [2b] (under the heading [2b]) as follows:

| **User interface t₃ (after execution of stored routine)** | |
|---|---|
| **[1] Basic Information** | |
| | [1.Q1] Company name? **Leo RegTech** |
| | [1.Q2] Place of business? **London** |
| | |
| **[2] Director** | |
| | [2.Q1] Director's Name? **Tom** |
| | [2.Q2] Are they at head office? **Yes** |
| | |
| **[2a] Director** | |
| | [2.Q1] Director's Name? **Dick** |
| | [2.Q2] Are they at head office? |
| | |
| **[2b] Director** | |
| | [2.Q1] Director's Name? **Harry** |
| | [2.Q2] Are they at head office? |

At time t₃, the structured data object contains one instance of block variables [1.q1], [1.q2], and [2.q2] since the user has provided input to corresponding questions [1.Q1], [1.Q2], [2.Q2]. The structured data object also contains three instances of block variable [2.q1] since the user has provided input to corresponding questions [2.Q1] three times, once for each of block [2], block [2a], and block [2b].

Variables [1.q1] and [1.q2] are instantiated in block [1]. Variables [2.q1] and [2.q2] are instantiated in block [2]. Variable [2.q1] is also instantiated twice more in blocks [2a] and [2b].

The identification module identifies that there are three first (innermost) nested blocks affected by the stored routine - namely blocks [2], [2a], and [2b]. Each of blocks [2], [2a] and [2b] comprise an instance of a block variable match for an (at least one) execution variable - variable [2.q1], and in the case of block [2] also [2.q2] (also none of blocks [2], [2], or [2b] contain a block nested within them which itself comprises an instance of any block variables [1.q1], [1.q2], [2.q1], [2.q2], [2.q3] and [2.1.q1]).

The implementation module then executes the stored routine on the identified first blocks as per method 300.

For block [2]: R1 and R2 are met to the same extent as at t2, and therefore the report section for block [2] is unchanged.

For block [2a]:
- R1 is met.
- The block variable match for execution variable [2.q1] can be found in the first (innermost) nested block (block [2a]), and the value "Dick" is assigned to execution variable [2.q1] (for that first block [2a]).
- Block variables [1.q1] and [1.q2] cannot be found in block [2a], so the implementation module recursively searches outwards from block [2a]. This recursive search comprises next searching the block that the first (innermost) nested block is contained directly within - block [1]. The block variable match for execution variables [1.q1] and [1.q2] can be found in block [1]. The value "Leo RegTech" is therefore assigned to execution variable [1.q1] (for that first block [2a]), and the value "London" is assigned to execution variable [1.q2] (for that first block [2a]).

For block [2b]:
- R1 is met.
- The block variable match for execution variable [2.q1] can be found in the first (innermost) nested block (block [2b]), and the value "Dick" is assigned to execution variable [2.q1] (for that first block [2b]).
- Block variables [1.q1] and [1.q2] cannot be found in block [2b], so the implementation module recursively searches outwards from block [2b]. This recursive search comprises next searching the block that the first (innermost) nested block is contained directly within - block [1]. The block variable match for execution variables [1.q1] and [1.q2] can be found in block [1]. The value "Leo RegTech" is therefore assigned to execution variable [1.q1] (for that first block [2b]), and the value "London" is assigned to execution variable [1.q2] (for that first block [2b]).

Thus, report output is generated and displayed to the user (via a user interface) as follows:

| **Report (t₃)** | |
|---|---|
| **[2]** *Leo RegTech is based in London* | |
| | *Tom is based at the head office in London.* |
| **[2a]** *Leo RegTech is based in London* | |
| **[2b]** *Leo RegTech is based in London* | |

At a time t₄ >t₃, the user enters additional text selected from a drop-down box into the user interface in response to question [2.Q2] for blocks [2a] and [2b] respectively as follows:

| **User interface t₄** | |
|---|---|
| **[1] Basic Information** | |
| | [1.Q1] Company name? **Leo RegTech** |
| | [1.Q2] Place of business? **London** |
| | |
| **[2] Director** | |
| | [2.Q1] Director's Name? **Tom** |
| | [2.Q2] Are they at head office? **Yes** |
| | |
| **[2a] Director** | |
| | [2.Q1] Director's Name? **Dick** |
| | [2.Q2] Are they at head office? **Same country** |
| | |
| **[2b] Director** | |
| | [2.Q1] Director's Name? **Harry** |
| | [2.Q2] Are they at head office? **Different country** |

In response to the user input, the execution module of the system executes the stored routine in accordance with method 300.

Now, in addition to those previously met, the condition for r2 in the first set of rules is met in respect of block [2a] and the condition for r3 in the first set of rules is met in respect of block [2b]. In response, the user interface is updated to show an instance of question [2.Q3] associated with block [2a], and an instance of section [2.1] (and question [2.1.Q1] associated with block [2b] as follows:

| **User interface t₄ (after execution of stored routine)** | | |
|---|---|---|
| **[1] Basic Information** | | |
| | [1.Q1] Company name? **Leo RegTech** | |
| | [1.Q2] Place of business? **London** | |
| | | |
| **[2] Director** | | |
| | [2.Q1] Director's Name? **Tom** | |
| | [2.Q2] Are they at head office? **Yes** | |
| | | |
| **[2a] Director** | | |
| | [2.Q1] Director's Name? **Dick** | |
| | [2.Q2] Are they at head office? **Same country** | |
| | [2.Q3] Where do the work? | |
| | | |
| **[2b] Director** | | |
| | [2.Q1] Director's Name? **Harry** | |
| | [2.Q2] Are they at head office? **Different country** | |
| | | |
| | **[2b.1] Non head-office** | |
| | | [2.1.q1] Why are they not based in the head office? |

At time t₄, the structured data object contains one instance of block variables [1.q1], and [1.q2] since the user has provided a single input to corresponding questions [1.Q1], [1.Q2]. The structured data object also contains three instances of block variable [2.q1] and [2.q2] since the user has provided input to corresponding questions [2.Q1] and [2.Q2] three times, once for each of block [2], block [2a], and block [2b].

Variables [1.q1] and [1.q2] are instantiated in block [1]. Variables [2.q1] and [2.q2] are instantiated once in each of in blocks [2], [2a] and [2b].

The identification module identifies that there are three first (innermost) nested blocks affected by the stored routine - namely blocks [2], [2a], and [2b]. Each of blocks [2], [2a] and [2b] comprise an instance of a block variable match for an (at least one) execution variable - variables [2.q1] and [2.q2] (also none of blocks [2], [2], or [2b] contain a block nested within them which itself comprises an instance of any block variables [1.q1], [1.q2], [2.q1], [2.q2], [2.q3] and [2.1.q1]).

The implementation module then executes the stored routine on the identified first blocks as per method 300.

For block [2]: R1 and R2 are met to the same extent as at t₃, and therefore the report section for block [2] is unchanged.

For block [2a]: R1 is met to the same extent as at t₃. No other rules are met and therefore the report section for block [2a] is unchanged.

For block [2b]: R1 is met to the same extent as at t₃. No other rules are met and therefore the report section for block [2b] is unchanged.

Thus, report output is generated and displayed to the user (via a user interface). This is the same as at t₃.

At a time t₅ >t₄, the user enters additional free text into the user interface in response to question [2.Q3] for block [2a] and question [2.1.Q1] for block [2b] respectively as follows:

| **User interface t5** | |
|---|---|
| **[1] Basic Information** | |
| | [1.Q1] Company name? **Leo RegTech** |
| | [1.Q2] Place of business? **London** |
| | |
| **[2] Director** | |
| | [2.Q1] Director's Name? **Tom** |
| | [2.Q2] Are they at head office? **Yes** |
| | |
| **[2a] Director** | |
| | [2.Q1] Director's Name? **Dick** |
| | [2.Q2] Are they at head office? **Same country** |
| | [2.Q3] Where do the work? **Cardiff** |
| | |
| **[2b] Director** | |
| | [2.Q1] Director's Name? **Harry** |
| | [2.Q2] Are they at head office? **Different country** |
| | |
| | **[2b.1] Non head-office** |
| | [2.1.q1] Why are they not based in the head office? **The company needed a representative in Ireland and so Harry works in Dublin.** |

At time t₅, the structured data object contains one instance of block variables [1.q1], and [1.q2] since the user has provided a single input to corresponding questions [1.Q1], [1.Q2]. The structured data object also contains three instances of block variable [2.q1] and [2.q2] since the user has provided input in response to corresponding questions [2.Q1]and [2.Q2] three times, once for each of block [2], block [2a], and block [2b].The structured data object further contains one instance of block variable [2.q3] since the user has provided a single input in response to corresponding question [2.Q3] and one instance of block variable [2.1.q1] since the user has provided a single input in response to corresponding question [2.1.Q1].

Variables [1.q1] and [1.q2] are instantiated in block [1]. Variables [2.q1] and [2.q2] are instantiated in block [2]. Variables [2.q1], [2.q2] and [2.q3] are instantiated in block [2a]. Variables [2.q1], [2.q2] and [2.1.q1 ] are instantiated in block [2b].

The identification module identifies that there are three first (innermost) nested blocks affected by the stored routine - namely blocks [2], [2a], and [2b.1]. Each of blocks [2], [2a] and [2b.1] comprise an instance of a block variable match for an (at least one) execution variable. For block [2] this match is variables [2.q1] and [2.q2], for block [2b] this match is variables [2.q1], [2.q2] and [2.q3], for block [2b.1] this match is variable [2.1.q1]. In addition, none of blocks [2], [2a], or [2b.1] contain a block nested within them which itself comprises an instance of any of block variables [1.q1], [1.q2], [2.q1], [2.q2], [2.q3] and [2.1.q1]).

The implementation module then executes the stored routine on the identified first blocks as per method 300.

For block [2]: R1 and R2 are met to the same extent as at t₄, and therefore the report section for block [2] is unchanged.

For block [2a]:
- R1 is met to the same extent as at t₄. R3 is also met.
- The block variable match for execution variable [2.q1] can be found in the first (innermost) nested block (block [2a]), and the value "Dick" is assigned to execution variable [2.q1] (for that first block [2a]) because this is the value of the instance of [2.q1]. The block variable match for execution variable [2.q2] can be found in the first (innermost) nested block (block [2a]), and the value "Same Country" is assigned to execution variable [2.q2] (for that first block [2a]) because this is the value of the instance of [2.q2]. The block variable match for execution variable [2.q3] can be found in the first (innermost) nested block (block [2a]), and the value "Cardiff" is assigned to execution variable [2.q3] (for that first block [2a]) because this is the value of the instance of [2.q3].
- Block variables [1.q1] and [1.q2] cannot be found in block [2a], so the implementation module recursively searches outwards from block [2a]. This recursive search comprises next searching the block that the first (innermost) nested block is contained directly within - block [1]. The block variable match for execution variables [1.q1] and [1.q2] can be found in block [1]. The value "Leo RegTech" is therefore assigned to execution variable [1.q1] (for that first block [2a]), and the value "London" is assigned to execution variable [1.q2] (for that first block [2a]).

For block [2b.1]:
- R1 and R4 are met.
- The block variable match for execution variable [2.1.q1] can be found in the first (innermost) nested block (block [2b.1]), and the value *"The company needed a representative in Ireland and so Harry works in Dublin."* is assigned to execution variable [2.1.q1] (for that first block [2b.1]) because this is the value of the instance of [2.1.q1].
- Block variables [1.q1], [1.q2], [2.q1] and [2.q2] cannot be found in block [2b.1], so the implementation module recursively searches outwards from block [2b.1]. This recursive search comprises next searching the block that the first (innermost) nested block is contained directly within - block [2b]. The block variable match for execution variables [2.q1] and [2.q2] can be found in block [2b]. The value "Harry" is therefore assigned to execution variable [2.q1] (for that first block [2b.1]), and the value "Different Country" is assigned to execution variable [2.q2] (for that first block [2b.1]).
- Block variables [1.q1] and [1.q2] cannot be found in block [2b], so the implementation module recursively searches outwards (again) from block [2b]. This recursive search comprises next searching the block that the first (innermost) nested block is contained directly within - block [1]. The block variable match for execution variables [1.q1] and [1.q2] can be found in block [1]. The value "Leo RegTech" is therefore assigned to execution variable [1.q1] (for that first block [2b.1]), and the value "London" is assigned to execution variable [1.q2] (for that first block [2b.1]).

Thus, report output is generated and displayed to the user (via a user interface) as follows:

| **Report (t₅)** | |
|---|---|
| **[2]** *Leo RegTech is based in London* | |
| | *Tom is based at the head office in London.* |
| **[2a]** *Leo RegTech is based in London* | |
| | *Dick is not in the London head office but works from Cardiff.* |
| **[2b.1]** *Leo RegTech is based in London* | |
| *Harry does not work in the same country as the London office of Leo RegTech.* | |
| | *The company needed a representative in Ireland and so Harry works in Dublin.* |

The skilled person would appreciate that there are many possible different variations of this example.

For example, the stored routine could be run in response to a run command (or specific user input - such as pressing a 'run' button) rather than in response to any new user input.

Additionally or alternatively, the stored routine could be amended to change the formatting of the report. For example, the stored routine may remove duplicate text and/or first block identification.

Additionally or alternatively, the stored routine could be amended such that some (of the second set of) rules are implemented (or run) once (only) per structured data object - this could be used to minimize/avoid duplicate text in the report.

Instead of first block identification, different headings could be used - for example based on the target type for the identified first blocks (and a number of those 'duplicate' blocks). Such a report could be output as below.

| **Report** | | |
|---|---|---|
| *Leo RegTech is based in London* | | |
| ***Director 1:*** | | |
| | *Tom is based at the head office in London.* | |
| ***Director 2:*** | | |
| | | *Dick is not in the London head office but works from Cardiff.* |
| ***Director 3:*** | | |
| | | *Harry does not work in the same country as the London office of Leo RegTech.* |
| | | *The company needed a representative in IreLand and so Harry works in Dublin.* |

It will be appreciated that the stored routine could be amended such that the second set of rules output the action irrespective of the condition for that rule being met. Where a variable is not instantiated (i.e. no value is assigned to that variable), the report output is generated with blank spaces or null values in the positions (or locations, or text) corresponding to the uninstantiated variable.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method for applying a stored routine to a plurality of blocks of a structured data object, wherein the blocks comprise one or more block variable instances, wherein the blocks are configured as one or more block nests, and wherein the stored routine, when executed, implements the processing of one or more execution variables, the method comprising:
identifying one or more first nested blocks, each first nested block comprising a block variable match for an execution variable;
executing the stored routine, wherein the executing comprises for each first nested block:
assigning a respective value to the execution variables, wherein the assigning comprises, for each respective one of the execution variables:
in response to a block variable match for the respective execution variable in the first nested block, assigning a value of that matched block variable to the respective execution variable; and
in response to there being no block variable match for the respective execution variable in the first nested block, recursively searching outwards from the first nested block for a block variable match for the respective execution variable.

2. The method of claim 1, wherein the plurality of blocks comprises duplicate blocks.

3. The method of any preceding claim, where each block is defined by a predetermined template.

4. The method of claim 3, further comprising:
generating one or more of the blocks using the predetermined template.

5. The method of any preceding claim, further comprising:
providing a user interface;
receiving user input from the user interface; and
setting or updating an instance of one or more of the block variables based on the user input.

6. The method of claim 5, further comprising:
updating a display of the user interface based on the user input.

7. The method of claim 6, wherein for each of the respective blocks:
the structured data object is associated with one or more questions;
one or more of the questions are displayed to the user; and
one or more block variable instance of the respective block corresponds to a respective user input answer to a respective one of the one or more questions.

8. The method of claim 7, wherein updating the display comprises changing the questions displayed to the user.

9. The method of claim 8, wherein changing the questions displayed to the user comprises displaying an additional question.

10. The method of any preceding claim, wherein the method further comprises outputting a report comprising:
for one or more of the identified first nested blocks, a respective section of the report comprising information based on the matched block variables associated with that respective first nested block.

11. The method of claim 10 when dependent on claim 5, wherein content of the report is dynamically updated based on the user input.

12. The method of any preceding claim, wherein the number of blocks can be dynamically altered via user input.

13. A system comprising one or more processors configured to perform the method of any one of claims 1-12.

14. A computer program comprising instructions which, when executed by one or more processors, cause the one or more processors to carry out the method of any one of claims 1-12.

15. A computer readable medium storing the computer program of claim 14.
